# EUROPEAN PATENT SPECIFICATION

(11) **EP 2 195 194 B1**
(45) Date of publication and mention of the grant of the patent: **13.04.2011**
(21) Application number: 08806835.8
(22) Date of filing: 03.10.2008
(51) Int. Cl.: B60Q 1/44, B60Q 1/54

(54) **DEVICE TO DISPLAY MOVING CONDITIONS OF A VEHICLE**
VORRICHTUNG ZUR DARSTELLUNG VON BEWEGUNGSBEDINGUNGEN EINES FAHRZEUGS
DISPOSITIF D'AFFICHAGE DE CONDITIONS DE DÉPLACEMENT D'UN VEHICULE

(30) Priority: 05.10.2007 HU 0700652
(43) Date of publication of application: 16.06.2010
(73) Proprietor: Budapesti Müszaki Es Gazdasagtudomanyi Egyetem, 1111 Budapest (HU)
(72) Inventor: ÁBRAHÁM, György, H-1121 Budapest (HU); FEKETE, Róbert, Tamas, H-1201 Budapest (HU)
(74) Representative: Mak, Andras
(86) International application number: PCT/HU2008/000113
(87) International publication number: WO 2009/044217

(56) References cited:
- EP-B- 0 381 767
- DE-A1- 1 630 028
- DE-A1- 2 921 676
- DE-A1- 19 605 813
- FR-A- 2 853 066
- GB-A- 2 114 826

## Description

The invention relates to a display device for external visual display of acceleration, deceleration and speed of a vehicle.

In roadway traffic, different problems have existed for a long time.

A car driver often decelerates his vehicle by using the engine brake instead of the brake system, which is not signaled to the following drivers and can result in accidents due to overrunning.

There are cases when the car driver simply does not actuate the accelerator pedal (lets the car roll) and the car decelerates only due to friction and oncoming wind; again, the following drivers do not receive any information; they may even conclude, from the other signals of the traffic situation, that they may accelerate and an accident by overrunning occurs.

The car driver may not be aware of the intensity of braking when a car traveling relatively near is decelerating, he will only realize the intensity of braking by experiencing the decrease of distance.

The car driver has to judge the speed difference by the time variation of the distance of the front vehicle or the change of the visible size of the other vehicle, as he cannot see its speed at a single glance.

When overtaking and using only the mirrors, it is difficult to estimate the speed of a vehicle traveling in an inner lane, thus on motorways in the acceleration lane, an accident by overrunning could occur when in front of a car proceeding at a high speed another vehicle with the intention to overtake appears, because its driver misjudges the speed of the approaching car which can no longer sufficiently decelerate.

The car driver cannot be sure that the vehicle to be overtaken will not start accelerating at the moment he is overtaken.

Normally, it is very difficult for a car driver to estimate the speed of vehicles of the oncoming traffic.

Another major main problem is the driving in darkness and being able to judge the moving state of the other vehicles.

We have found that the existing brake lights are necessary but they provide only little information on the deceleration of the vehicle. Brake lights provide the same information to the following drivers whether the driver of the lead vehicle only presses the brake pedal slightly or when he applies a blocking emergency brake.

Furthermore we have found, that just because of this uncertainty, drivers do not take into account seriously enough the lighting up of brake lights, but rather search for additional information, e.g. by judging the driving situation in front of the braking car, which is not always visible.

We think that some of the accidents by overrunning could be avoided, if the speed of an overtaking vehicle traveling in a side lane could be estimated more precisely by looking in a rearview mirror.

It has been found that a light signal that provides information concerning the increase/decrease of speed and the magnitude of momentary speed would supply more information than a brake light.

According to the state of the current techologies there are devices and methods for the purpose of satisfying these needs.

The measurement of motion conditions, detection of the actuation of the brake and gas pedals was proposed in most patents (EP0813996, WO0192061). It is perceivable in many patents that the useful signal is gained by applying a direct acceleration sensor. (i.e. DE19508416 and DE3319731.) In many cases we discovered that producing a speed signal based on the measurements of revolutions of the wheel in question is also an accepted mode of producing the acceleration signal (US5631627, US5148147). Finally, in other known solutions, the vehicle's existing signals (ABS, ESP) are used for further processing (GB2300908, US2002133282).

After processing the received signal, the motion conditions of the vehicle are displayed by the means of specific methods, for which it can be said that varied solutions were created. The road leads from the modification of the light intensity (WO0192061, US2002133282), through the modification of the wavelengths (colors) of light (DE10243828, US6870474, GB2398681), and the modification of the light-emitting surface (EP0813996, WO9117068) to the modification of the frequency of flashes (GB2300908, US5631627). In several cases it is suggested to use acceleration displays (GB1235457, DE19808142, WO9416919), speed displays (EP0997344, US5656992) and displays mounted on the front windscreen of the vehicle (CA2466026, DE19808142). FR-A-2 853 066 discloses a display device comprising a first linear or analog display element and a second digital display element.

However, these known solutions suffer from various deficiencies and sometimes theoretical defects.

Concerning the source of the accelerating and decelerating signals, we find the measurements of the pedal's pressure and angle of inclination inadequate. These can be misleading; furthermore they do not accomplish a uniform, comparable signal because this characteristic varies with each vehicle. The signals received from the pedals are applicable, but only with significant modifying factors, which vary with the vehicle.

The main defect of acceleration sensors based on the simple theory of inertia is their sensitivity to the angle of inclination of the vehicle, the slope, and this results in a serious defect factor in the displayed value.

The change of speed or the number of revolutions within a specific unit of time is also useful in acquiring an acceleration/deceleration signal. Since this procedure generally takes up time, (because in order to calculate the change of velocity two samples, two speeds - revolutions - are necessary) such a device is not preferred for sensing the momentary acceleration, since in this case, it is very important that the vehicle's motion status can be displayed in the shortest time possible.

The technical development of today's car industry encourages us to accept the most plausible way (to produce the useful signal) and utilize the already existing signals of the vehicle. This solution is much more professional than the individual sensors. The majority of cars today (and in the future) contain ABS, ESP or other auxiliary systems, which contain the acceleration sensor (producing a signal insensitive to tilting), and speed-measuring device. This solution is the most reflective of an integrated method of thought. We consider the simplicity of the system and its assembly very important; its compatibility with already existing systems is a fundamental requirement.

Among various display modes promoting communication by light signals we discovered many solutions that conflict with principals either of transportation or those of human optics.

An ideal example of this is the modification of light intensity. It is very difficult to assume motion conditions based on the modification of the light's intensity, because if, for example, vehicles are passing through extreme weather conditions, where due to the effects of rain, fog, and snow, among other things, the light-intensity of the display perceivable by human is modified substantially, allowing to conclude that the vehicle is going slower, actuating the brake/decelerating less intensly, thus significantly increasing a risk of accident.

A modification of the color of light can also be quite dangerous, if the vehicle drivers confuse the colors assigned to speeds and acceleration/deceleration values. It must also be stated, that the use of various colored light sources demands a longer period of memorization, so we should strive for the minimal use of colors, furthermore, we may only use colors that do not conflict with rules of traffic, or those of human stereotypes.

Modifying the illuminated surface is also a plausible solution, but the estimation of the motion conditions can only be used within a small range. Within a larger scale, the modifications of the illuminated surface seem like modifications in light intensity, which, seems like a less plausible solution, as mentioned in the description above. None of these inventions supply the driver with a visual frame of reference, and thus make the exact assessment of the speed, and acceleration/deceleration quite difficult.

Because a flashing display is extremely useful for capturing one's attention, it is ideal for emergency brakes. However, it is completely unsuitable as a long-term speed and acceleration/deceleration display, because of its previously mentioned advantage (drawing one's attention upon itself) it distracts the driver's attention from ongoing traffic, therefore the use of flashing light sources in traffic should be limited as much as possible. Furthermore it must be stated that the privilege of flashing light sources is restricted to ambulance, police, and firefighting vehicles.

We've found several patents in reference to displays fixed onto the front of vehicles, however none of these are like the speed displaying light row fixed onto the font windscreen of the vehicle, neither in form nor in function.

In several patents we can read about the external display of a vehicle's speed, but generally these consist of matrix-like light points, which form a numerical image.

The following patents are regarded to be closest prior art of our invention: HU 224 153 B1, EP 0 299 933, DE 22 29 482, DE 198 38 879.

However, none of the mentioned patents contain a display characterizing the vehicle's speed, we believe that applying the intensity of acceleration, without the speed indicating light row adds yet more risk of an accident to traffic, because the following traffic hazard can occur: as the lead vehicle suddenly accelerates, the entire range of accelerating (green) lights light up which could encourage the following traffic to accelerate even if its speed is far above that of the leading vehicle. Therefore, we find the installation of the speed indicating light row indispensable when using the acceleration display device.

With the exception of HU patent No. 224 153 B1, none of the patents contain a limiting light source displaying the maximum size of the light rows, with which the drivers can determine the value of a vehicle's speed, acceleration/deceleration regardless of the distance. This is important because the drivers (especially in the dark) can see the complete display field along with the momentary conditions, through which they can discern the vehicles motion conditions through a relative assessment.

We believe the solution disclosed in HU patent No. 224 153 B1 is not satisfactory concerning the device's sensory range and step size (resolution). We are convinced that it is impractical to adjust the braking maximum to a value around 1g (which can be procured by modern ABS systems), because this value is characteristic of the maximum braking capacity, (which is practically a blocking brake) so that at a more moderate braking (0.8 - 0.9g), which is still a highly powerful breaking force, the following traffic will be informed that the braking force was not "complete," meaning it did not require the full length of the light row, signifying no major problem. We believe in order to decrease risk of an accident, we must give up the option of granting the following traffic a precise perception of the intensity of braking in case of a more intense braking. Instead, a similar type of force, though not quite the same as blocking would also cause the entire light row to light up, hinting to the following traffic that this is an emergency, even though the lead driver did not take advantage of the maximum brake force. Furthermore it must be stated that that vehicles lacking, or not using an ABS system have no reason to set up a 1 g measuring range display device, because their maximum deceleration value is 0.6 to 0.8 g.

Our opinion concerning the segmentation of the display is that no more than nine conditions are needed to be differentiated, because on any larger scale, the resolution of human eyes, and on smaller scales, human positioning capabilities concerning pedals do not justify this.

The display modes of the available patents are extraordinarily varied. However, none of the patents contain the display method (that is, in our opinion, most expedient), in which the complete light row consists of at least 7 units (for practical reasons, no more than 20 units), the two outer light-emitting units light up when the lower threshold is reached, thus designating a starting point of the range, and as the signal (speed, acceleration/deceleration) value increases, the center unit of the light row is illuminated, followed by the illumination of the units widening the light row from center to both sides, until finally all the light emitting elements are illuminated. This method of display was created because it is impractical to split the display light row into two parts, as that would disturb human perception. Perceived from different distances, two segments could be mistaken as a single blot, or converge. As a solution, we suggest a light row of a single part, and in which after the illumination of the two outermost light sources marking maximum range, the units are illuminated from the center of the light row, sequentially towards the two extremities. This way the light-symbol communication is evident, and more comprehensible; furthermore, it remains within the resolution limit of human eyes, even when considering larger distances.

Furthermore, it is important, that as opposed to many patents that the display light row take up the full width of the vehicle, thus increasing the area of its utility. This way the data characteristic of the motion conditions is assessable even from distant vehicles.

There are many patents concerning the field of our invention, and they propose lots of ideas, but in many cases, they are not well thought-out and do not reach an adequate level of technical development. Most of the patents have problems, and because of this, they, or parts of them can only be used within the industry (in transportation) after certain types of modification. Though these many inventors have worked out new methods on the whole, they have not provided a solution that contains an effective, practically useful solution, applicable in the near future, contained within one patent.

Therefore there is a need for a solution, or developing a product, which - taking full advantage of the current solutions and the opportunities of automobile manufacturers - provides a useful solution to the communication of vehicle motion conditions (their acceleration, deceleration, and speed) to participants of traffic.

There is a need for a system in which signals characteristic of a vehicle's motion conditions, are supported by already existing stable and trustworthy systems, which display the vehicle's deceleration, acceleration and speed with one ore more third lights, which use the full potential geometry of the vehicle, for the purpose of producing human perception-aiding signal for the drivers, which through combining the existing systems, creates a new apparatus, reflecting integrated thinking processes, and some of the most important qualities of the device such as simplicity, easy application, are important because human sensors will be perceiving the light signals.

In view of the above-mentioned critiques, the invention refers to the following device: A processing unit receives a vehicle's acceleration, deceleration, and speed signals provided by an inertia based acceleration-sensor and/or some other acceleration-sensor and/or a wheel revolution sensor (for determining the speed) and/or some other speed sensor and/or pressure sensor for the purpose of determining the pressure on the brake pedal and or pressure sensor for the purpose of determining the pressure on the gas pedal and/or by means of measuring the position of the brake pedal and/or by means of measuring the position of the gas pedal and/or using already existing signals of the vehicle (e.g. BUS signal). Then it calculates from the received signals the signal for controlling the light display characteristic of the acceleration value, the signal for controlling the light display characteristic of the deceleration value and the signal for controlling the light display characteristic of the speed value.

These singals are forwarded to an exterior, visually perceptible portion of the vehicle where the acceleration signal light, the deceleration signal light, and speed signal light are displayed (preferably a LED display) arranged in two isolated rows consists of more (preferably 9-17) light-emitting units, one of which is consisting of light-emitting units capable of emitting two different colored lights (red for deceleration, preferably green for acceleration), another consisting of light-emitting units capable of emitting one color (preferably blue or yellow).

The light emitting unit is controlled by the received signals; e.g. the (preferably green) light display units capable of emitting accelerating light signals are controlled proportionally with the received acceleration signal, (in the case of a smaller acceleration, smaller number of units are in operation, and the line is shorter, in the case of a larger acceleration, larger number of units are in operation and the line is longer); the (preferably red) light display units capable of emitting decelerating light signals are controlled proportionally with the received deceleration signal, (in the case of a smaller deceleration, smaller number of units are in operation, and the line is shorter, in the case of a larger deceleration, larger number of units are in operation and the line is longer); the (preferably blue and yellow) light display units capable of emitting speed light signals are controlled proportionally with the received speed signal, (in the case of a lower speed, smaller number of units are in operation, and the line is shorter, in the case of a higher speed, larger number of units are in operation and the line is longer).

The system according to the invention is composed of three fundamental elements:
1. Sensor(s)
2. Processing unit(s)
3. Display device(s)

The rapid development of sensor technology does not allow the listing of all sensors that we find applicable for the purposes of the invention, so we will only mention the sensors most wide-spreadly used today. The sensory elements of the system can be selected from the following exemplary but not exclusive list of sensors and signal-sources: inertia based acceleration sensor, acceleretation sensor based on other principles, wheel revolution sensor (for determining speed), speed sensor based on other principles, pressure sensor for the purpose of determining the pressure on the brake pedal, pressure sensor for the purpose of determining the presure on the gas pedal, device for measuring the position of the brake pedal, device for measuring the positioning of the gas pedal, use of the vehicle's existing signals (e.g. BUS-signal).

By applying these sensors and signal sources, the processing unit develops a speed and acceleration value for the vehicle.

The processing unit of the system receives, analyses and transforms the signals provided by the sensors and signal sources.

The processing unit provides two output signals in response to an incoming signal of the speed sensors and/or the vehicle's already existing signals (e.g. BUS signal).

One of the signals serving the purpose of operating the deceleration signal light, containing the negative range of the above mentioned sensor's signal ranges, in a way that the negative range of the incoming signal and the quotient of an appropriately high deceleration value (preferably 0.8 g) operates a proportionate number of light-emitting units as described in the paragraph entitled "Display Methods" concerning the installed display in the deceleration light emitting portion of the deceleration and acceleration signal light emitting device. (e.g. at - 0.3 g input signal, the output deceleration signal operates 0.3/X * S number of light-emitting elements, as described in the paragraph entitled "Display Methods", in the portion used to emit decelerating light signals of the installed display unit capable of emitting decelerating and accelerating light signals, where X is a suitably high deceleration value (typically 0.8 g), and S is the number of all the light emitting elements of the deceleration and acceleration light signal-emitting elements making up the installed display device.)

Another signal, serving the purpose of operating the acceleration signal light, containing the positive range of the above mentioned sensor's signal ranges, in a way that the positive range of the incoming signal and the quotient of an appropriately high acceleration value (typically 0.8 g) operates a proportionate number of light-emitting units as described in the paragraph entitled "Display Methods" concerning the installed display in the acceleration light emitting portion of the deceleration and acceleration signal light emitting device. (e.g. at 0.3 g input signal, the output acceleration signal operates 0.3/X * S number of light-emitting elements, as described in the paragraph entitled "Display Methods", in the portion used to emit accelerating light signals of the installed display unit capable of emitting decelerating and accelerating light signals, where X is a suitably high deceleration value (typically 0.8 g), and S is the number of all the light emitting elements of the deceleration and acceleration light signal-emitting elements making up the installed display device.)

The processing unit provides an output signal for controlling the light emitting elements of the speed display in response to the input signals acquired by a wheel-revolution-based sensor (for determining the speed) and/or a sensor based on another principle and/or the vehicle's existing signals (e.g. BUS signal) in which the output signal operates a number of light emitting elements proportional to the quotient of the incoming signal and of a sufficiently high speed value (preferably 150 km/h) in the portion used to emit speed light signals of the installed display unit as described in the paragraph entitled "Display Methods". (e.g. at 100 km/h input signal, the output speed signal operates 100/X * S number of light-emitting elements, as described in the paragraph entitled "Display Methods", in the portion used to emit speed light signals of the installed display unit, where X is a suitably high speed value (typically 150 km/h), and S is the overall number of the light emitting elements of the speed light signal-emitting elements making up the installed display device.)

The display element of the system is a device capable of emitting a multicolored light (of various wavelengths) only perceivable from the outside of the car in the upper portions of the vehicle's windshield and rear window, utilizing its full width, in a row like fashion, and placed perpendicularly to the vehicle's longitudal axis, in which:
1. The device placed on the vehicle's windshield is only capable of displaying speed, is composed of many light-emitting elements which provide the visible lights.
2. The device placed on the vehicle's rear window is capable of displaying speed and acceleration/deceleration, is located in two rows (one under the other), and both rows are composed of many light-emitting elements which provide visible lights.

The communication with light signals, meaning acceleration, deceleration, and speed values (referred to as motion conditions) is accomplished by the following procedure, or display mode.

The two outer light emitting elements of the "light row" composed of elemental light emitting units light up in an initial state (once the position light is on), designating the full range of speed, acceleration and deceleration. Ranging from the small speed-, acceleration-, and deceleration values to larger ones, the units of the "light row" light up first from the center then one by one (in an additive manner), the elements of the "light row" of the display activate towards the device's outer ends in both directions, thus informing members of traffic of the acceleration/deceleration and speed of a vehicle with proportional line lengths.

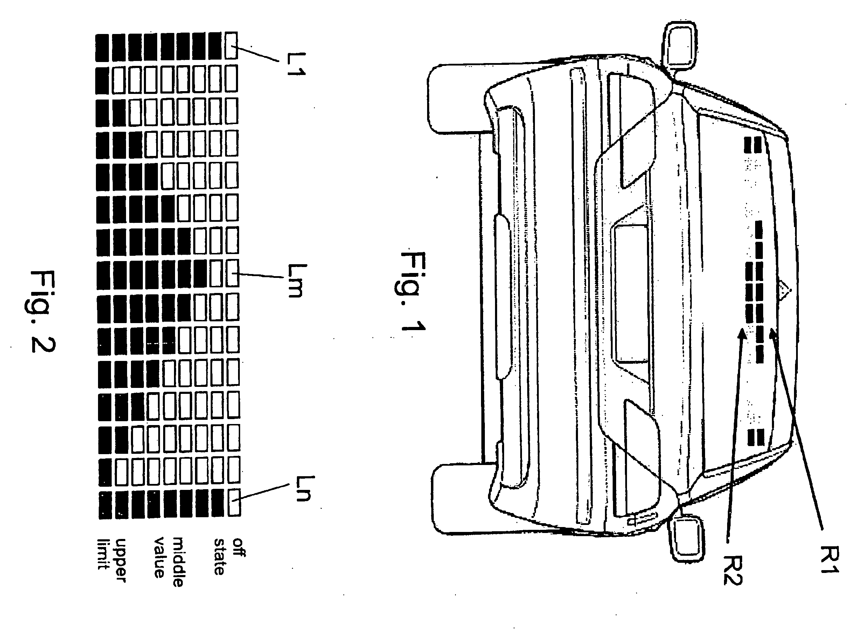

## Claims

1. Display device for providing visual information concerning a vehicle's motion conditions to other participants of traffic, comprising a first row (R1) of light sources for visually displaying information of the value of the vehicle's deceleration or acceleration and a second row (R2) of light sources for simultaneously visually displaying information of the value of the vehicle's speed with the light sources being placed on at least one of the front and rear windows of the vehicle, **characterized in that** the light sources (L1 ... Ln) are light emitting elements that can be controlled to radiate at least one specific colour, and at least one of the rows (R1, R2) comprise light emitting elements (L1...Ln) for emitting two different colors of light, one colour for deceleration, and another colour for acceleration.

2. The device of Claim 1, **characterized by** leading the signals obtained from acceleration and speed sensors into a signal processing unit, through which a number of light emitting elements (L1...Ln) - typically LED light sources - proportional to the acceleration and speed light up in the light-emitting unit.

3. The device of claim 2, **characterized in that** the illumination of the sequential light sources (L1 ... Ln) happens in an additive fashion, without a terminating event.

4. The device of claim 3, **characterized in that** upon reaching an upper threshold value, all the light-emitting elements (L1... Ln) are illuminated.

5. The device of claim 2, **characterized in that** the acceleration/deceleration and speed signal sensor units are selected from the group comprising: an inertia based acceleration sensor, an acceleration sensor based on another principle, a wheel revolution based sensor to determine the speed, a speed sensor based on another principle, a pressure sensor for determining the pressure on the brake pedal, a pressure sensor for determining the pressure on the gas pedal, a device for measuring the status of the brake pedal, a device for measuring the status of the gas pedal, and an existing signal of the vehicle, e.g. BUS-signal.

6. The device of claim 2, **characterized by** the placement of two range-indicating light sources (L1, Ln), located on both ends of the illuminating light sources (L1... Ln) arranged in a row, indicating the total range of speed, acceleration and deceleration.

7. The device of claim 2, **characterized by** the symmetrical left-right illumination of the light sources (L1... Ln) from the center (Lm) of the line outwards, following the line or the windshield.

8. The device of claim 2, **characterized in that** the signal for the operation of the decelerating light signal contains the negative range of the sensors' signal value, in such a way that it operates a number of light-emitting elements (L1... Ln) of the installed display unit in the deceleration light emitting portion of the light emitting device for signaling deceleration and acceleration, the number being proportional to the quotient of the negative range of the incoming signal and an appropriately high deceleration value, typically 0.8 g.

9. The device of claim 2, **characterized in that** the signal for the operation of the accelerating light signal contains the positive range of the sensors' signal value, in such a way that it operates a number of light-emitting elements (L1... Ln) of the installed display unit in the acceleration light emitting portion of the light emitting device for signaling deceleration and acceleration, the number being proportional to the quotient of the positive range of the incoming signal and an appropriately high acceleration value, typically 0.8 g.

10. The device of claim 2, further comprising a processing unit for providing an output signal for controlling the light emitting elements (L1...Ln) of the speed display processing the input signals acquired by a wheel-revolution-based sensor for determining the speed and/or a sensor based on another principle and/or the vehicle's existing signals, e.g. BUS signal, in which the output signal operates a number of light emitting elements (L1...Ln) proportional to the quotient of the incoming signal and of a sufficiently high speed value, typically 150 km/h, in the portion used to emit speed light signals of the installed display unit.

11. The device of claim 1, **characterized in that** rear window of the vehicle is used for the displaying of the acceleration/deceleration and speed, and the front windshield is used for displaying the speed of the vehicle.

12. The device of claim 11, **characterized in that** the light sources (L1...Ln) arranged in a line are installed onto the upper or lower edge of the glass of the front or rear window in such a way that their light will only be visible from outside the vehicle.

13. The device of claim 11, **characterized in that** the length of the line-shaped light source arrangement (R1, R2) is substantially equal to the length of the glass of the windshields.

14. The device of claim 11, **characterized in that** the longitudinal axis of the display device (R1, R2) is substantially perpendicular to the vertical axis of the vehicle.

## Patentansprüche

1. Darstellungsvorrichtung zum Bereitstellen von visuellen Informationen betreffend die Bewegungsbedingungen eines Fahrzeugs für andere Verkehrsteilnehmer, mit einer ersten Reihe (R1) von Lichtquellen zur visuellen Darstellung von Informationen über den Wert der Verzögerung oder Beschleunigung des Fahrzeugs, und einer zweiten Reihe (R2) von Lichtquellen zur gleichzeitigen visuellen Darstellung von Informationen über den Wert der Fahrzeuggeschwindigkeit, wobei die Lichtquellen an dem vorderen und/oder hinteren Fenster des Fahrzeugs angeordnet sind, **dadurch gekennzeichnet, dass** die Lichtquellen (L1... Ln) lichtemittierende Elemente sind, welche gesteuert werden können, um mindestens eine spezielle Farbe abzustrahlen, wobei auch mindestens eine der Reihen (R1, R2) lichtemittierende Elemente (L1... Ln) umfasst, um zwei verschiedene Lichtfarben abzustrahlen, eine Farbe für die Verzögerung und eine andere Farbe für die Beschleunigung.

2. Vorrichtung nach Anspruch 1, **gekennzeichnet durch** das Führen der Signale, die von den Beschleunigungs- und Geschwindigkeitssensoren erhalten werden, in eine Signalverarbeitungseinheit, wodurch eine Anzahl von lichtemittierenden Elementen (L1...Ln) - typischerweise LED-Lichtquellen - proportional zur Beschleunigung und Geschwindigkeit in der lichtemittierenden Einheit aufleuchten.

3. Vorrichtung nach Anspruch 2, **dadurch gekennzeichnet, dass** die Beleuchtung der abfolgenden Lichtquellen (L1... Ln) in additiver Art und Weise geschieht, ohne ein Abbruchereignis.

4. Vorrichtung nach Anspruch 3, **dadurch gekennzeichnet, dass** beim Erreichen eines oberen Schwellwertes alle lichtemittierenden Elemente (L1...Ln) beleuchtet werden.

5. Vorrichtung nach Anspruch 2, **dadurch gekennzeichnet, dass** die Beschleunigungs/Verzögerungs- und Geschwindigkeits-Signalsensoreinheiten aus der Gruppe ausgewählt werden, die umfasst:
einen trägheitsbasierten Beschleunigungssensor, einen Beschleunigungssensor, der auf einem anderen Prinzip basiert, einen Raddrehungs-basierten Sensor zur Bestimmung der Geschwindigkeit, einen Geschwindigkeitssensor basierend auf einem anderen Prinzip, einen Drucksensor zum Bestimmen des Druckes am Bremspedal, einen Drucksensor zum Bestimmen des Druckes am Gaspedal, einer Vorrichtung zum Messen des Status bzw. Zustandes des Bremspedals, einer Vorrichtung zum Messen des Status bzw. Zustandes des Gaspedals, und ein existierendes Signal des Fahrzeugs, beispielsweise ein BUS-Signal.

6. Vorrichtung nach Anspruch 2, **gekennzeichnet durch** das Platzieren von zwei bereichsanzeigenden Lichtquellen (L1, Ln), die an beiden Enden der aufleuchtenden Lichtquellen (L1...Ln) platziert und in einer Reihe angeordnet sind, wobei sie den Gesamtbereich für die Geschwindigkeit die Bescheunigung und die Verzögerung anzeigen.

7. Vorrichtung nach Anspruch 2, **gekennzeichnet durch** die symmetrische Links-Rechts-Beleuchtung der Lichtquellen (L1... Ln) vom Zentrum (Lm) der Linie nach außen, und zwar der Linie der Windschutzscheibe folgend.

8. Vorrichtung nach Anspruch 2, **dadurch gekennzeichnet, dass** das Signal für die Betätigung des Verzögerungslichtsignals den negativen Bereich der SensorSignalwerte enthält, und zwar in einer solchen Weise, dass es eine Anzahl von lichtemittierenden Elementen (L1...Ln) der installierten Darstellungseinheit in dem Verzögerungs-Lichtemissionsabschnitt der lichtemittierenden Vorrichtung betätigt, um Verzögerung und Beschleunigung zu signalisieren, wobei die Anzahl proportional zu dem Quotienten des negativen Bereichs des eingehenden Signals und eines geeignet hohen Verzögerungswertes ist, typischerweise 0,8g.

9. Vorrichtung nach Anspruch 2, **dadurch gekennzeichnet, dass** das Signal für die Betätigung des Beschleunigungslichtsignals den positiven Bereich des Sensorsignalwertes enthält, und zwar in solcher Weise, dass er seine Anzahl von lichtemittierenden Elementen (L1... Ln) der installierten Darstellungseinheit im Beschleunigungs-Lichtemissionsabschnitt der lichtemittierenden Vorrichtung zum Signalisieren von Verzögerung und Beschleunigung betätigt, wobei die Anzahl proportional zu dem Quotienten des positiven Bereiches des eingehenden Signals und einem geeignet hohen Beschleunigungswert ist, typischerweise 0,8g.

10. Vorrichtung nach Anspruch 2, die ferner eine Verarbeitungseinheit zur Bereitstellung eines Ausgangssignals zum Steuern der lichtemittierenden Elemente (L1... Ln) der Geschwindigkeitsdarstellung aufweist, welche die Eingangssignale, die durch einen Raddrehungs-basierten Sensor zur Bestimmung der Geschwindigkeit und/oder einen Sensor basierend auf einem anderen Prinzip und/oder ein existierendes Fahrzeugsignal, z.B. BUS-Signal, verarbeitet, wobei das Ausgangssignal eine Anzahl von lichtemittierenden Elemente (L1... Ln) betätigt, die proportional zu dem Quotienten des eingehenden Signals und eines ausreichend hohen Geschwindigkeitswertes ist, typischerweise 150km/h und zwar in dem Abschnitt, der verwendet wird, um Geschwindigkeitslichtsignale der installierten Darstellungseinheit zu emittieren.

11. Vorrichtung nach Anspruch 1, **dadurch gekennzeichnet, dass** die Rückscheibe des Fahrzeugs für das Darstellen der Beschleunigung/Verzögerung und der Geschwindigkeit verwendet wird, und die vordere Windschutzscheibe verwendet wird, um die Geschwindigkeit des Fahrzeugs darzustellen.

12. Vorrichtung nach Anspruch 11, **dadurch gekennzeichnet, dass** die Lichtquellen (L1...Ln), die in einer Linie angeordnet sind, an dem oberen oder unteren Ende des Glases der vorderen oder hinteren Scheibe in einer solchen Weise installiert sind, dass ihr Licht von außerhalb des Fahrzeugs sichtbar sein wird.

13. Vorrichtung nach Anspruch 11, **dadurch gekennzeichnet, dass** die Länge der linienförmigen Lichtquellenanordnung (R1, R2) im Wesentlichen gleich der Länge des Glases der Windschutzscheiben ist.

14. Vorrichtung nach Anspruch 11, **dadurch gekennzeichnet, dass** die Längsachse der Darstellungsvorrichtung (R1, R2) im Wesentlichen senkrecht zur Vertikalachse des Fahrzeugs liegt.

## Revendications

1. Dispositif d'affichage pour fournir de l'information visuelle concernant les conditions de mouvement d'un véhicule à d'autres participants de la circulation, comprenant une première rangée (R1) de sources de lumière pour présenter visuellement des informations concernant la valeur de décélération ou d'accélération du véhicule et une deuxième rangée (R2) de sources de lumière pour présenter visuellement simultanément des informations concernant la valeur de vitesse du véhicule, les sources de lumière étant placées sur au moins l'une des vitres avant et arrière du véhicule, **caractérisé en ce que** les sources de lumière (L1... Ln) sont des éléments émetteurs de lumière qui peuvent être contrôlés afin d'émettre au moins une couleur spécifique, et au moins l'une des rangées (R1, R2) comprend des éléments émetteurs de la lumière (L1... Ln) pour émettre deux couleurs différentes de lumière, une couleur pour la décélération, et une autre couleur pour l'accélération.

2. Dispositif selon la revendication 1, **caractérisé par** l'acheminement des signaux provenant de capteurs d'accélération et de vitesse vers une unité de traitement de signal, à travers lequel un certain nombre d'éléments émetteurs de lumière (L1... Ln) - typiquement des sources de lumière LED - proportionnel à l'accélération et vitesse s'allument dans l'unité émettrice de lumière.

3. Dispositif selon la revendication 2, **caractérisé en ce que** l'illumination des sources de lumière séquentielles (L1... Ln) se réalise d'une manière additive, sans événement de terminaison.

4. Dispositif selon la revendication 3, **caractérisé en ce qu'**à l'atteinte d'une valeur seuil supérieure, tous les éléments émetteurs de lumière (L1... Ln) sont illuminés.

5. Dispositif selon la revendication 2, **caractérisé en ce que** les unités de capteur de signal d'accélération/décélération et de vitesse sont choisies dans le groupe comprenant: un capteur d'accélération basé sur l'inertie, un capteur d'accélération basé sur un autre principe, un capteur pour déterminer la vitesse basé sur la révolution de roue, un capteur de vitesse basé sur un autre principe, un capteur de pression pour déterminer la pression sur la pédale de frein, un capteur de pression pour déterminer la pression sur la pédale d'accélérateur, un dispositif pour mesurer l'état de la pédale de frein, un dispositif pour mesurer l'état de la pédale d'accélérateur, et un signal existant du véhicule, e.g. signal de BUS.

6. Dispositif selon la revendication 2, **caractérisé par** le placement de deux sources de lumière indicatrices de plage (L1, Ln), situées sur les deux extrémités des sources de lumière illuminant (L1... Ln) disposés selon une rangée, indiquant la plage totale de vitesse, d'accélération et de décélération.

7. Dispositif selon la revendication 2, **caractérisé par** l'illumination symétrique gauche-droite des sources de lumière (L1... Ln) depuis le centre (Lm) vers l'extérieur de la ligne, suivant la ligne ou le pare-brise.

8. Dispositif selon la revendication 2, **caractérisé en ce que** le signal pour le fonctionnement du signal de lumière de décélération contient la plage négative de valeur du signal des capteurs, de telle sorte qu'il fait fonctionner un certain nombre d'éléments émetteurs de lumière (L1... Ln) de l'unité d'affichage installée dans la partie d'émission de lumière de décélération du dispositif émetteur de lumière pour signaler décélération et accélération, le nombre étant proportionnel au quotient de la plage négative du signal d'entrée et une valeur de décélération suffisamment élevée, typiquement 0,8 g.

9. Dispositif selon la revendication 2, **caractérisé en ce que** le signal pour le fonctionnement du signal de lumière d'accélération contient la plage positive de valeur du signal des capteurs, de telle sorte qu'il fait fonctionner un certain nombre d'éléments émetteurs de lumière (L1... Ln) de l'unité d'affichage installée dans la partie d'émission de lumière d'accélération du dispositif émetteur de lumière pour signaler décélération et accélération, le nombre étant proportionnel au quotient de la plage positive du signal d'entrée et une valeur d'accélération suffisamment élevée, typiquement 0,8 g

10. Dispositif selon la revendication 2, comprenant en outre une unité de traitement pour fournir un signal de sortie pour contrôler les éléments émetteur de lumière (L1... Ln) de l'affichage de vitesse traitant des signaux d'entrée acquis par un capteur basé sur la révolution de roue pour déterminer la vitesse et/ou un capteur basé sur un autre principe et/ou les signaux existants du véhicule, e.g. signal BUS, dans lequel le signal de sortie fait fonctionner un certain nombre d'éléments émetteurs de lumière (L1... Ln) proportionnel au quotient du signal d'entrée et d'une valeur de vitesse suffisamment élevée, typiquement 150 km/h, dans la partie utilisée pour émettre des signaux de lumière de vitesse de l'unité d'affichage installée.

11. Dispositif selon la revendication 1, **caractérisé en ce que** la vitre arrière du véhicule est utilisée pour afficher l'accélération/décélération et vitesse, et le pare-brise avant est utilisé pour afficher la vitesse du véhicule.

12. Dispositif selon la revendication 11, **caractérisé en ce que** les sources de lumière (L1... Ln) disposées en une ligne sont installées sur le bord supérieur ou inférieur du vitrage de la vitre avant ou arrière de telle sorte que leur lumière ne sera visible que de l'extérieur du véhicule.

13. Dispositif selon la revendication 11, **caractérisé en ce que** la longueur de l'agencement de source de lumière en forme de ligne (R1, R2) est sensiblement égale à la longueur du vitrage des pare-brises.

14. Dispositif selon la revendication 11, **caractérisé en ce que** l'axe longitudinal du dispositif d'affichage (R1, R2) est sensiblement perpendiculaire à l'axe vertical du véhicule.
